# EUROPEAN PATENT APPLICATION

(11) **EP 4 375 257 A1**
(43) Date of publication of application: **29.05.2024**
(21) Application number: 22209686.9
(22) Date of filing: 25.11.2022
(51) Int. Cl.: C04B 7/12, C04B 20/04, C04B 28/04, C04B 28/06

(54) **METHOD FOR CALCINING CLAY**

(71) Applicant: Heidelberg Materials AG, 69120 Heidelberg (DE)
(72) Inventor: MULLER, Arnaud, 69120 Heidelberg (DE); PATO, Nicolas, 69120 Heidelberg (DE); CHEN, Yen-Hau, 69120 Heidelberg (DE); DRUART, Sacha, 69120 Heidelberg (DE); CLAUSTRIAUX, Gregory, 69120 Heidelberg (DE)
(74) Representative: Zellentin & Partner mbB Patentanwälte

(57) **Abstract**

Method for calcining clay comprising the steps of providing a clay raw material with an iron content of at least 2 wt.-%, calculated as Fe₂O₃ on a loss on ignition at 950 °C free basis with respect to the total clay raw material, forming lumps from the clay raw material with a surface to volume ratio in the range from 0.05 to 1 mm⁻¹ and a size from 5 to 25 mm in the minimum extension, calcining the lumps at a temperature from 450 to 1100 °C under oxidizing conditions to provide calcined lumps, and cooling and grinding the calcined lumps to provide calcined clay, as well as use of the calcined clay to make composite cement and method for manufacturing composite cement or alkali activated binder or road binder by mixing the calcined clay with a hydraulic cement to make the composite cement or road binder or mixing the calcined clay with an activator to make the alkali activated binder.

## Description

The present invention relates to an improvement in the calcination of clay.

The calcination of natural clay to produce calcined clay for use as main cement constituent implies an activation at high temperature. With clay raw materials having a significant iron content this often leads to oxidation of the iron bearing minerals present within the clay deposits. The oxidation of the iron occurring during the heat treatment leads to a reddish color of the resulting calcined clay powder. To keep such clay dark (non-red), reducing conditions during calcination and/or upon cooling are often used, see e.g. WO 2016/082936 A1 and references cited therein. This however implies extra efforts and extra costs to generate the reducing conditions and to control the calcination process (mainly in relation to emission control). Thus, the object remains to find a method for calcining clay with raised iron content providing a dark and non-reddish colored calcined clay.

It was now surprisingly found that a preatreatment of the raw clay forming lumps with a low surface to volume ratio allows a calcination in oxidizing conditions and still obtaining a grey to black ground calcined clay. Although the calcined lumps are red on the outside, the dark colored interior dominates the color of the ground calcined clay due to the low surface to volume ratio. Since calcination using normal oxidizing conditions is possible, the formation and emission of volatile compounds from the calcination is avoided or at least reduced.

Therefore, the present invention solves the above mentioned problem by a method for calcining clay comprising the steps:
- providing a clay raw material with an iron content of at least 2 wt.-%, calculated as Fe₂O₃ on a loss on ignition at 950 °C free basis with respect to the total clay raw material,
- forming lumps from the clay raw material with a surface to volume ratio in the range from 0.05 to 1 mm⁻¹ and a size from 5 to 25 mm in the minimum extension
- calcining the lumps at a temperature from 450 to 1100 °C under oxidizing conditions to provide calcined lumps, and
- cooling and grinding the calcined lumps to provide calcined clay.
The object is also achieved with using the calcined clay to make composite cement and with a method for manufacturing composite cement or alkali activated binder or road binder by mixing the calcined clay with a hydraulic cement to make the composite cement or road binder or with an activator to make the alkali activated binder.

It was already suggested in WO 2022/130192 A1 to granulate raw clay in order to facilitate the handling thereof and especially to allow calcination in a rotary kiln with cooling in a usual grate cooler. However, WO 2022/130192 A1 fails to consider the question of oxidation of the iron, in fact an iron content is not mentioned, and the described granulation is a quite demanding process. According to WO 2022/130192 A1 the clay granules should have a volume based particle size from 3 to 80 mm, preferably from 25 to 35 mm. Such sizes are too small in the lower range and too high in the higher range to achieve a calcination of iron containing clay without oxidation of the iron. In the upper range the surface to volume ratio is too big to safely avoid ingress of oxygen. In the lower range the particles are too big to safely complete calcination of the entire material. It was not known or expected from WO 2022/130192 A1 that lumps with an adjusted surface to volume ratio could solve the problem of iron oxidation. One of ordinary skill in the art would have resorted to the known reducing conditions for this also in WO 2022/130192 A1.

The method according to the present invention uses a pre-treatment of the raw clay by agglomeration, pelletizing or extrusion into lumps with a defined size before the calcination step. This ensures a dominating dark color once the calcined clay agglomerates/pellets/extrusions are ground. The darker color achieved compared to no pre-treatment is a consequence of the fact that the inside of the lumps will remain of dark color due to lack of contact with oxygen. Only the outer layer, i.e. an outer shell, of the lumps in contact with the oxidizing atmosphere acquires a reddish color due to the oxidation of the iron. If the lumps have a surface to volume ratio as defined, the volume of the dark inside is much bigger than the volume of the reddish outside. As a result and once ground, the bulk calcined clay powder will be dominated by the dark color of the inside, thus limiting the reddish color tone of the final powder. This is important for markets where the color of the cement in which the calcined clay is incorporated must not have a red color tone. The calcination in oxidizing atmosphere also allows to limit the emissions of SOₓ, NOₓ and volatile organics compared to a calcination in reducing conditions. Additionally, the formation of lumps allows a much more stable calcination process ensuring a higher stability and homogeneity of the kiln feed and a more stable exposition of the material to the heat.

The clay raw material can be any clay comprising at least 10 wt.-% clay mineral phases, preferably it contains at least 20 wt.-% clay mineral phases, most preferred at least 50 wt.-%. Clay mineral phases are hydrous phyllosilicates with variable amounts of aluminium, magnesium, iron, alkali, and alkaline earth cations. They are fine-grained down to colloidal-size and characterized by their layered structures. They are part of soils, clay-bearing sediments as well as sedimentary rocks. They can be activated by calcination to provide a pozzolanic material useful as a cement component. Those are for example, but not limited to, kaolinite, illite, and smectite-type clay mineral phases. Typical further components in the clay raw material are quartz, feldspar and other minerals usually intermixed with the clay mineral phases in natural deposits. Such other phases are preferably present in the clay raw material in amounts of not more than 50 wt.-%, more preferred not more than 20 wt.-%, most prefrred not more than 10 wt.-%. It is also possible to use clay waste materials containing the above mentioned amounts of clay mineral phases, e.g. waste from manufacturing clay products (clay pots, clay bricks, clay tiles, etc.) and dried out clay, as the clay raw material. Mineral phase is used herein without any restriction regarding crystallinity, i.e. clay mineral phases can also be semi-crystalline or appear amorphous due to very small crystallite sizes.

According to the invention, clay raw materials with an iron content of at least 2 wt.-%, calculated as Fe₂O₃ on a loss on ignition at 950 °C free basis with respect to the total clay raw material, are useful. Typically, the iron content ranges from 3 to 20 wt.-% or from 4 to 12 wt.-%. Calcining such clay raw materials in oxidizing conditions without the prior forming into lumps would result in a reddish color of the ground calcined clay.

The lumps formed in the pre-treatment according to the invention have a surface to volume ratio in the rage from 0.05 to 1 mm⁻¹, preferably in the range from 0.1 to 0.8 mm⁻¹, more preferred from 0.15 or 0.17 to 0.8 mm⁻¹, most preferred from 0.2 or 0.3 to 0.7 mm⁻¹. The size of the lumps in their minimum extension ranges from 5 to 25 mm, preferably from 6 to 23 mm. Thereby, an efficient calcination within acceptable times is possible, that ensures that the ingress of oxygen into the lumps remains low enough. The maximum extension can typically be up to 100 mm, or up to 40 mm. Depending on the amount and nature of clay mineral phases in the clay raw material it is conceivable that lumps with a higher maximum size in the minimum direction and/or a surface to volume ratio below 0.15 mm⁻¹ can be successfully calcined with the method according to the invention. One example of such circumstances is kaolinite with an iron content in the lower range like 2 to 5 wt.-% and low amounts of other clay mineral phases. Such a clay raw material can be calcined at moderate temperatures of 600 to 700 °C even if the lumps are up to 40 mm or up to 30 mm in size in the minimum direction and/or have a surface to volume ratio of at least 0.05 mm⁻¹ or at least 0.1 mm⁻¹. For other clay raw materials like mixtures of clay phases and/or higher iron contents the conditions for calcination would need careful control or it might be impossible to calcine them successfully and safely in oxidizing conditions, i.e. achieving high pozzolanic reactivity without reddish color.

The lumps can be formed by many known processes. Preferred are extrusion and pressing/compacting in moulds. It is also possible to use pelletizing or granulation. A specific form of the lumps is not needed, only the surface to volume ratio and the size in the direction of minimum extension are important. The lumps can be irregular or regular shaped aggregates or more regular shaped extrudates and also more or less uniformly shaped products of pressing, compacting, pelletizing or granulation. In view of the desired simplicity of processing lumps made by pressing, compacting, pelletizing and extrusion are used according to the invention.

In a typical extrusion process the clay raw material is - if necessary after comminution - provided with or adjusted to a moisture content from 2 to 40 wt.-%, preferably from 5 to 30 wt.-%, most preferred from 8 to 20 wt.-%, as a malleable mass which is fed to an extruder. Adjusting moisture content can also take place inside the extruder by feeding the clay raw material and water to the extruder. The clay raw material is extruded through a - usually multiple orifice - die to provide strands with the desired size of up to 25 mm in one extension. Mostly the strands will be round with a diameter from 5 to 25 mm, preferably from 6 to 23 mm. The length is unimportant, however, the strands normally brake up of their own into pieces with a length of several mm to several cm during their further handling, e.g. lengths of up to 5 mm or up to 10 mm or up to 40 mm or up to 100 mm. Usually, the strands are extruded onto a belt that transports them to the kiln for calcination. Optionally, a drying is foreseen. Such lumps possess a surface to volume ratio in the desired range and can be calcined e.g. in a rotary kiln and cooled in a usual cooler.

When the lumps are formed by pressing or compacting, the clay raw material can also first be comminuted and/or adjusted to a suitable moisture content, typically to a moisture content from 2 to 40 wt.-%, preferably from 5 to 30 wt.-%, most preferred from 8 to 20 wt.-%, if needed. The clay raw material is then fed to a press which forms e.g. pillow shaped lumps. Those are fed to a kiln for calcination, optionally after drying.

Further, the clay raw material can be pelletized with known devices to pellets with the defined surface to volume ratio. Since this process usually requires a stricter adjustment of moisture and control of the conditions it is less preferred than extrusion or pressing/compaction. Granulation, i.e. forming spherical particles as proposed in WO 2022/130192 A1, is also possible but it has the highest demand on process conditions and is preferably not used according to the invention.

The lumps are calcined at a temperature in the range from 450 to 1100 °C, preferably from 500 to 1000 °C, most preferred from 600 to 900 °C. The kilns and conditions known as such can be used. Suitable kilns are for example but not limited to rotary kilns, shaft kilns, and static kilns. Further, fluidized bed reactors can be used. Preferably the lumps from the clay raw material are calcined in a rotary kiln.

As mentioned, calcination takes place in oxidizing conditions. Oxidizing conditions are the normal situation for rotary kilns and other kilns unless specific measures are taken to create reducing conditions. For example, an excess of fuel provides reducing conditions. According to the invention such measures are not taken. Thus, emissions of SOₓ which result from reduction of sulfur compounds, of NOₓ which result from reduction of nitrogen compounds, and of volatile organics which are typically generated during burning a fuel under oxygen lean conditions, are reduced or do not arise.

The calcined clay is subsequently cooled in a cooler known as such, for example in a grate cooler. Here, too, no reducing conditions are necessary or used according to the invention. The lumps may break into smaller lumps upon transfer from kiln to cooler but are normally not disintegrated during calcination so that the calcined clay is still in the form of lumps. This facilitates cooling and further handling. As known from cement clinker cooling, the lumps are typically cooled in countercurrent air. Also as known from clinker cooling, the hot air can be used in the kiln for combustion and/or for preheating and/or drying of the clay raw material and/or for other processes/in other nearby devices.

The cooled lumps are finally ground to the fineness necessary or desired for the intended use of the calcined clay. The known devices, e.g. ball mills, are suitable.

A preferred use is as pozzolan in composite cements. For this, a particle size distribution with a D₉₀ from 30 to 150 µm, preferably from 50 to 120 µm, most preferred from 60 to 100 µm, and/or a Dso from 5 to 50 µm, preferably from 8 to 40 µm, most preferred from 10 to 30 µm, and/or a D₁₀ from 0.1 to 5 µm, preferably from 0.3 to 3 µm, most preferred from 0.5 to 2 µm is normally adjusted. Particle sizes in the range below 1 or 2 mm are measured according to ... herein.

Grinding can also take place together with the cement clinker and/or other components of the composite cement like additional supplementary cementitious materials and/or fillers. Thereby, grinding and homogeneous mixing are achieved at the same time. Grinding aids can be used, especially alkanolamines, preferably monoethanolamine, diglycolamine, diethanolamine, diisopropanolamine, methyldiethanolamine, triethanolamine, triisopropanolamine, and diethanol-isopropanolamine.

The composite cement typically comprises from 10 to 65 wt.-% hydraulic cement and from 90 to 35 wt.-% calcined clay, preferably from 20 to 60 wt.-% hydraulic cement and from 80 to 40 wt.-% calcined clay, most preferred from 40 to 50 wt.-% hydraulic cement and from 60 to 50 wt.-% calcined clay, all with respect to the total composite cement weight. Naturally, the amounts of all components in a specific composite cement add up to 100 %, so if calcined clay and hydraulic cement are the sole components their amounts add up to 100 %, when there are other components, the combined amount of calcined clay and hydraulic cement is less than 100 %.

The hydraulic cement can be any known hydraulic cement. The hydraulic cement is preferably selected from Portland cement with or without sulfate, calcium sulfoaluminate cement, calcium aluminate cement and dicalcium silicate cement. Preferred hydraulic cements are Portland cements, calcium sulfoaluminate cement and calcium aluminate cement.

If the hydraulic cement is separately ground, the Blaine fineness ranges typically from 2000 to 10000 cm²/g, preferably from 3000 to 9000 cm²/g, most preferred from 4000 to 8000 cm²/g.

The composite cement can also comprise other generally known ingredients like additives and/or admixtures and/or additional supplementary cementitious materials.

Often used admixtures are water reducing agents and plasticizers like for example, but not exclusively, organic compounds with one or more functional group selected from carboxylate, sulfonate, phosphonate, phosphate or alcohol. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements, air entrainment to resist freeze thaw cycles, etc. Useful air entraining agents are e.g. surface active substances, especially ones based on soaps from natural resins or synthetic nonionic and ionic surfactants.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulfonates, hydroxycarboxylic acids and their salts, phosphonates, sugars (saccharides).

It is also possible to add admixtures that are designed to modify the rheology properties, i.e. rheology modifiers like polycarboxylates, lignosulfonates, starch, Karoo gum, bentonite clay, polyvinyl alcohol, and mixtures thereof.

It is also possible to add admixtures that are designed to accelerate the evolution of the setting and/or of the compressive strength development. These can be, but are not limited to, alkaline sulfates, alkaline chlorides or alkaline nitrates. In particular, an application of these accelerators combined with amines is beneficial. Suitable amines are for example, but not limited to, monoethanolamine, diglycolamine, diethanolamine, diisopropanolamine, methyldiethanolamine, triethanolamine, triisopropanolamine, and diethanol-isopropanolamine. Especially preferred are triethanolamine, triisopropanolamine, and diethanol-isopropanolamine. Application of other accelerators that are known in concrete technology is possible as well.

All admixtures are used in the amounts known as such, wherein the amount is adapted to a specific binder and special needs in the known manner.

Additives are for example fillers, pigments, polymers and fibers. Fillers are usually ground minerals, i.e. stone dusts, especially limestone, dolomite and mixtures thereof, preferably limestone. In case the filler is ground separately, which may be preferred due to differing grindability of filler, cement clinker and calcined clay, it has preferably a Blaine fineness from 2000 to 15000 cm²/g, preferably from 3000 to 12000 cm²/g, most preferred from 4000 to 8000 cm²/g.

Additional supplementary cementitious materials are for example but not limited to ground granulated blast furnace slag and other latent-hydraulic or pozzolanic slags, fly ashes both calcium rich and calcium lean ones, burnt oil shale, natural pozzolans like volcanic ash and ground volcanic glass, artificial pozzolans, and mixtures thereof.

The calcined clay obtained according to the invention can also be used as an alkali activated binder or as a hydraulic road binder according to EN 13282. Hydraulic Road Binder is a material designed for treatment of road bases, subbases as well as earthworks. European Standard EN 13282 defines and gives the specifications for hydraulic road binders, that are produced in a factory and supplied ready for treatment of materials for bases, sub-bases and capping layers as well as earthworks, in road, railway, airport and other types of infrastructure. Known hydraulic road binder contains both cement clinker and a substantial amount of SCMs. Therefore, the use of hydraulic road binders from the calcined clay obtained according to the invnetion and a hydraulic cement has the potential to be more cost-effective and environmentally friendly than Portland cement.

For use, the composite cement or alkali activated binder or hydraulic road binder comprising the calcined clay obtained according to the invention is usually transformed into a hydraulically hardening building material, e.g. into mortar or concrete or road binder, by mixing with water. Typically, a water to binder weight ratio (w/b) from 0.1 to 1, preferably from 0.15 to 0.75, and more preferred from 0.35 to 0.65 is used. The calcined clay and - if applicable one or more additional supplementary cementitius materials that are optionally added - are included into the amount of binder for calculating the w/b ratio. The mortar or concrete usually also contains aggregates as well as optionally admixtures and/or additives. Admixtures and additives have been described before.

The composite cement and alkali activated binder made with the calcined clay obtained according to the invention are useful for all applications where ordinary Portland cement and known composite cements are used, especially concrete, mortar, and construction chemical products such as screed, tile adhesive etc. The hydraulic road binder made with the calcined clay obtained according to the invention is also useful and used in the same way as known hydraulic road binders.

Usually, aggregate and admixtures are added when making a hydraulically hardening building material like concrete or mortar from the composite cement according to the invention. The known aggregate and usual admixtures are used in the usual amounts. For construction chemical products like floor screed or tile adhesive any necessary aggregate and admixture is typically added to the composite cement to form a dry mix, as far as possible. The aggregate and admixture are chosen depending on use in a manner well known per se. Hydraulic road binders ususally do not contain aggregate.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1

Clay raw material of the chemical and phase composition shown in table 1 was mixed with water to adjust a moisture content of 10 wt.-% and extruded into lumps with a diameter of 5 mm and a length between 10 and 100 mm after hitting a belt for transportation to a rotary kiln. Inside the rotary kiln the lumps were calcined at a temperature in the range from 750 to 850 °C by burning in an oxygen excess. The lumps were then transferred to a cooler and cooled with air fed to the cooler from the opposite end. The cooled lumps were ground in a laboratory ball mill to a fineness of 90 wt.% passing 100 µm.

**Table 1**

| **element/oxide** | **Method** | **amount** |
|---|---|---|
| SO₃-CS-analyzer | DIN 51724-1:2019 and DIN EN 15408:2011 | 0.44 |
| LOI 1050 °C | DIN EN 196-2:2013 | 11.14 |
| SiO₂-XRF | DIN EN 196-2:2019 | 59.83 |
| Al₂O₃-XRF | DIN EN 196-2:2013 | 15.63 |
| TiO₂-XRF | DIN EN 196-2:2013 | 0.86 |
| MnO-XRF | DIN EN 196-2:2013 | 0.01 |
| Fe₂O₃-XRF | DIN EN 196-2:2013 | 5.72 |
| CaO-XRF | DIN EN 196-2:2013 | 1.05 |
| MgO-XRF | DIN EN 196-2:2013 | 1.66 |
| K₂O-XRF | DIN EN 196-2:2013 | 2.95 |
| Na₂O-XRF | DIN EN 196-2:2013 | 0.22 |
| SO₃-XRF | DIN EN 196-2:2013 | 0.11 |
| P₂O₅-XRF | DIN EN 196-2:2013 | 0.10 |

| **phase** | **formula** | **amount** |
|---|---|---|
| Dihydrate | CaSO₄ • 2H₂O | 0.31 |
| Quartz | SiO₂ | 26.59 |
| Opal | SiO₂ • nH₂O | 0.43 |
| Calcite | CaCO₃ | 0.90 |
| Goethite | FeO(OH) | 3.98 |
| Albite | NaAlSi₃O₈ | 3.12 |
| Orthoclase | KAlSi₃O₈ | 7.89 |
| Illite | (K.H₃O)(Al.Mg.Fe)₂(Si.Al)₄O₁₀(OH)₂ | 14.53 |
| Kaolinite | Al₂Si₂O₅(OH)₄ | 14.82 |
| Vermiculite | Mg_{0.7}(Mg.Fe.Al)₆(Si.Al)₈O₂₀(OH)₄ * 8H₂O | 0.66 |
| Hematite | Fe₂O₃ | 0.44 |
| Anatase | TiO₂ | 0.77 |
| Pyrite | FeS2 | 1.50 |
| Amorphous content | - | 24.05 |

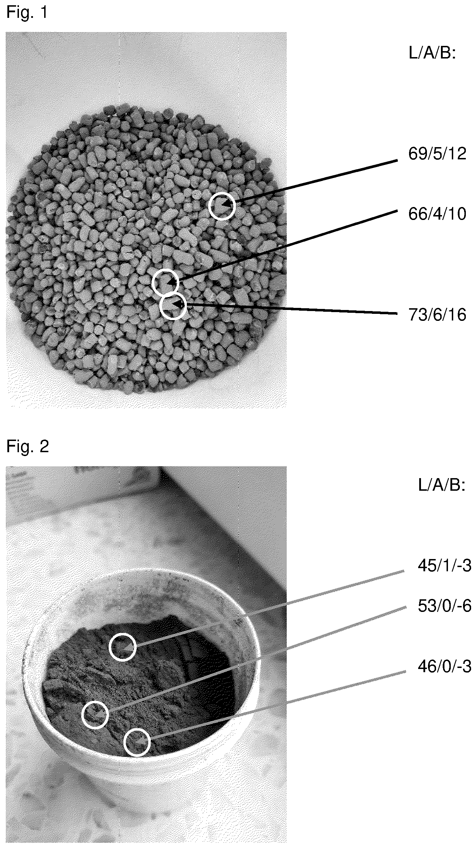

Figure 1 shows the lumps after calcination and cooling. Figure 2 shows the ground calcined clay. It is readily apparent that iron was oxidized on the surface of the lumps during calcination. But the iron inside remained reduced so that after grinding the dark grey to black color of the inside dominates the color of the product. The colors determined from the original color photos with https://imagecolorpicker.com/ in the LAB model at three points each are 69/5/12; 66/4/10 and 73/6/16 for the surface in figure 1 and 45/1/-3; 46/0/-3 and 53/0/-6 for the ground material in figure 2.

### Example 2

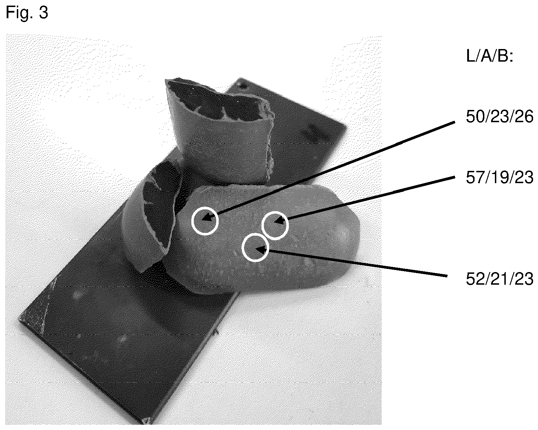

A clay raw material with a BET surface of 38.46 m²/g measured according to ISO9277:2010 and with the chemical and phase composition shown in table 2 and having a moisture content of 10 wt.-% was formed into lumps in a press. The obtained pillow shaped lumps were 40 mm long, 20 mm wide and 15 mm high. The lumps were then calcined in a laboratory stationary oven as follows: 30 minutes heating time from room temperature to 800 °C and then maintaining at 800 °C for 1 hour. After this, the lumps were left to cool down at room temperature on a table. During the calcination the lumps broke in two parts. Nevertheless, the inside stayed black and the outside was red after the cooling as shown in figure 3. The color determined for the surface with https://imagecolorpicker.com/ in the LAB model at three points is 57/19/23; 52/21/23 and 50/23/26. The ground material had roughly the same color as that in figure 2.

**Table 2**

| **element/oxide** | **Method** | **amount** |
|---|---|---|
| sulfur (CS analyzer) | DIN 51724-1:2019 and DIN EN 15408:2011 | 1.31 % |
| SO₃-CS-analyzer | DIN 51724-1:2019 and DIN EN 15408:2011 | 3.27 % |
| LOI 1050 °C | DIN EN 196-2:2013 | 11.29 % |
| SiO₂-XRF | DIN EN 196-2:2019 | 60.22 % |
| Al₂O₃-XRF | DIN EN 196-2:2013 | 15.62 % |
| TiO₂-XRF | DIN EN 196-2:2013 | 0.85 % |
| MnO-XRF | DIN EN 196-2:2013 | 0.02 % |
| Fe₂O₃-XRF | DIN EN 196-2:2013 | 6.33 % |
| CaO-XRF | DIN EN 196-2:2013 | 1.21 % |
| MgO-XRF | DIN EN 196-2:2013 | 1.70 % |
| K₂O-XRF | DIN EN 196-2:2013 | 2.94 % |
| Na₂O-XRF | DIN EN 196-2:2013 | 0.27 % |
| SO₃-XRF | DIN EN 196-2:2013 | 0.10 % |
| P₂O₅-XRF | DIN EN 196-2:2013 | 0.11 % |

| **phase** | **formula** | **amount** |
|---|---|---|
| Dihydrate | CaSO₄ • 2H₂O | 0.80 % |
| Quartz | SiO₂ | 34.70 % |
| Opal | SiO₂ • nH₂O | 0.90 % |
| Calcite | CaCO₃ | 0.60 % |
| Goethite | FeO(OH) | 0.70 % |
| Albite | NaAlSi₃O₈ | 1.90 % |
| Orthoclase | KAlSi₃O₈ | 4.60 % |
| Illite | (K.H₃O)(Al.Mg.Fe)₂(Si.Al)₄O₁₀(OH)₂ | 20.20 % |
| Kaolinite | Al₂Si₂O₅(OH)₄ | 14.40 % |
| Vermiculite | Mg_{0.7}(Mg.Fe.Al)₆(Si.Al)₈O₂₀(OH)₄ * 8H₂O | 1.10 % |
| Hematite | Fe₂O₃ | 0.20 % |
| Anatase | TiO₂ | 0.40 % |
| Pyrite | FeS2 | 1.50 % |
| Amorphous content | - | 17.90 % |

### Example 3

Pillow shaped lumps were made as described in example 2 but from two different clay raw materials. One had an iron content around 6 wt.-%, the other, a mixture of two clays, of around 7 wt.-%. The lumps were calcined in a semi-pilot rotary kiln with the following conditions:
- Calciner tube: outer/inner diameter = 800/600 mm, total/working length = 9180/8170 mm, slope 2 %
- Feeding rate: 50 - 60 kg/h
- residence time of material: 80 minutes
- RPM: 1
- Material temperature beneath flame (kiln end) from 750 to 950 °C
- Material fed at the kiln inlet is at ambient temperature and in the range of 350 - 450 °C at the inlet end inside the kiln as material temperature increases due to the hot gas flowing in counter current
The produced calcined clay remained in the reduction state, i.e. had a dark black color, in the inner part at all calcination temperatures. The product remained in lump form after calcination, although temperature influenced the stability of the lumps. A higher temperature increases cracking, split lumps, and crumbs. In uncracked/complete lumps the clays calcined at different temperatures all showed a similar structure of inner dark black core and outer reddish shell. But higher temperature produces a thicker reddish shell. It was confirmed by XRD analysis that the inner part of the lumps was calcined properly. The kaolinite peak disappeared above 750 °C due to activation. Illite peak shrunk properly at 850 °C for the inner part and outer shell. The original iron content in the clay influences the extent of the reddish outer shell at high calcination temperature (850 °C). Also, a higher iron content resulted in a redder outer shell. But since the ground calcined clay had a dark grey to black color for all samples it is clear that espcially clay with higher iron content benefits from the invention. Calcination temperature and lump form and size are adapted to maintain a proper amount of the inner dark core of the lumps or the other way round to avoid the reddish outer shell becomes too thick. The calcined clay obtained had similar colors on the surface as the calcined clay in figure 1. The inside appeared black like the ground material in figure 2.

## Claims

1. Method for calcining clay comprising the steps:
- providing a clay raw material with an iron content of at least 2 wt.-%, calculated as Fe₂O₃ on a loss on ignition at 950 °C free basis with respect to the total clay raw material,
- forming lumps from the clay raw material with a surface to volume ratio in the range from 0.05 to 1 mm⁻¹ and a size in the minimum extension of the lumps from 5 to 25 mm,
- calcining the lumps at a temperature from 450 to 1100 °C under oxidizing conditions to provide calcined lumps, and
- cooling and grinding the calcined lumps to provide calcined clay.

2. Method according to claim 1, wherein the surface to volume ratio ranges from 0.1 to 0.8 mm⁻¹, preferably from 0.15 or 0.17 to 0.8 mm, most preferred from 0.2 or 0.3 to 0.7 mm⁻¹, and/or the size in the minimum extension ranges from 6 to 23 mm.

3. Method according to claim 1 or 2, wherein the clay raw material is provided with or adjusted to a moisture content from 2 to 40 wt.-%, preferably from 5 to 30 wt.-%, most preferred from 8 to 20 wt.-%, optionally after comminution.

4. Method according to one of claims 1 to 3, wherein the lumps are formed by extrusion, by pressing or compacting in a mold, or by pelletizing, preferably by extrusion or by pressing or compacting in a mold.

5. Method according to claim 4, wherein the lumps are formed by feeding the clay raw material to an extruder with a multiple orifice die having an orifice size from 5to 25 mm, preferably from 6 to 23 mm, in the minimum extension, most preferred round orifices, extruding strands from the die and depositing the strands onto a belt, where the strands brake up into pieces with lenghts from 5 mm to 100 mm.

6. Method according to claim 4, wherein the lumps are formed by pressing or compacting the clay raw material in molds with a size from 5 to 25 mm in the minimum extension, preferably in molds resulting in pillow shaped lumps with a length from 20 to 60 mm and a width from 10 to 20 mm and a height (minimum extension) from 5 to 20 mm.

7. Method according to one of claims 1 to 6, wherein the calcination takes place in a rotary kiln, shaft kiln, static kiln or fluidized bed reactor, preferayl in a rotary kiln, and/or at a temperature in the range from 500 to 1000 °C, preferably from 600 to 900 °C.

8. Method according to one of claims 1 to 7, wherein the clay raw material contains at least 20 wt.-% clay mineral pahses, preferably at least 20 wt.-%, most preferred at least 50 wt.-%, and/or not more than 50 wt.-% other phases than clay mineral phases, preferably not more than 20 wt.-%, most preferred not mor than 10 wt.-%, and/or the clay raw material contains 3 to 20 wt.-% iron calculated as Fe₂O₃ on a loss on igntion at 950 °C free basis with respect to the total clay raw material, preferably from 4 to 12 wt.-%.

9. Use of a calcined clay obtainable by a method according to one of claims 1 to 8 for manufacturing composite cement, wherein the composite cement preferably comprises from 10 to 65 wt.-% hydraulic cement and from 90 to 35 wt.-% calcined clay, more preferred from 20 to 60 wt.-% hydraulic cement and from 80 to 40 wt.-% calcined clay, most preferred from 40 to 50 wt.-% hydraulic cement and from 60 to 50 wt.-% calcined clay.

10. Use according to claim 9, wherein the hydraulic cement is Portland cement clinker, Portland cement, calcium sulfoaluminate cement, calcium aluminate cement or dicalcium silicate cement, preferably Portland cement, calcium sulfoaluminate cement or calcium aluminate cement.

11. Use according to claim 9 or 10, wherein the composite cement further comprises an admixture, an additive and/or an additional supplementary cementitious material.

12. Method for manufacturing a composite cement, an alkali activated binder or a hydraulic road binder, comprising manufacturing a calcined clay according to one of claims 1 to 8 and mixing the calcined clay with a hydraulic cement to make the composite cement or hydraulic road binder, or mixing the calcined clay with an activator to make the alkali activated binder.

13. Method according to claim 12, wherein the hydraulic cement is Portland cement clinker, Portland cement, calcium sulfoaluminate cement, calcium aluminate cement or dicalcium silicate cement, preferably Portland cement, calcium sulfoaluminate cement or calcium aluminate cement.

14. Method according to claim 12 or 13, wherein the composite cement or the alkali activated or the hydraulic raod binder further comprises an admixture, an additive and/or an additional supplementary cementitious material.
